# EUROPÄISCHE PATENTANMELDUNG

(11) **EP 2 489 252 A1**
(43) Veröffentlichungstag der Anmeldung: **22.08.2012**
(21) Anmeldenummer: 12401020.8
(22) Anmeldetag: 14.02.2012
(51) Int. Cl.: A01C 7/08, A01C 15/04

(54) **Pneumatischer Dosierer**

(30) Priorität: 19.02.2011 DE 102011000830
(71) Anmelder: Amazonen-Werke H. Dreyer GmbH & Co. KG, 49205 Hasbergen (DE)
(72) Erfinder: Bruns, Helmut, 27804 Berne (DE); Mertens, Daniel, 26135 Oldenburg (DE)

(57) **Zusammenfassung**

Pneumatischer Dosierer (1) zum Einbringen von landwirtschaftlichen Materialien, insbesondere Microgranulat, in einen Luftstrom mit einem Dosiergehäuse (3), welches Lufteinlassöffnungen (6), an welche zumindest eine von einem Gebläse (15) mit Druckluft beaufschlagte Luftzuleitung (11) angeschlossen ist, und Abgangsöffnungen (7), an denen mit einer Luftströmung beaufschlagte Materialleitungen (5) anschliessbar sind, aufweisen, wobei der Anschlussbereich der Luftzuleitung (11) an das Gehäuse (3) vor den Lufteinlässenöffnungen (6) als Diffusor (9) ausgebildet ist, wobei der Diffusor (9) jeweils ein beabstandet zueinander angeordnetes Boden- (12) und Deckenwand (13) aufweist. Um einen Diffusor (9) mit Luftzuleitung (11) vorzuschlagen, welche den Einbau von Luftzuleitung (11) und Diffusor (9) in kompakt bauende Verteilmaschinen mit engen Einbauverhältnissen unter Beibehaltung einer gleichmäßigen Luftverteilung ermöglicht, wird vorgeschlagen, dass die Luftzuleitung (11) unter einem Winkel zwischen 90° und 130° zu dem Boden- (12) und/oder Deckenwand (13) in den Diffusor (9) einmündet, so dass die Boden- (12) und/oder Deckenwand (13) eine Prallflaeche für die aus der Luftzuleitung (11) in den Diffusor (9) strömenden Luftstrom ist.

## Beschreibung

Die Erfindung betrifft einen pneumatischen Dosierer gemäß des Oberbegriffes des Patentanspruches 1.

Ein derartiger pneumatischer Dosierer ist beispielsweise durch die EP 1 064 833 B1 bekannt. Der Diffusor zwischen dem Gebläse und den Lufteinlassöffnungen des Dosierers ist langgestreckt ausgebildet. Die Luftzuleitung mündet in gerader Linie in Verlängerung der Längsachse des Diffusors in den Diffusor ein. Dies bedingt eine relativ lange Bauweise des Diffusors, um eine möglichst gleichmäßige Aufteilung der von dem Gebläse zugeführten Luft auf die Lufteinlassöffnungen des Dosierers zu gewährleisten. In vielen Fällen, insbesondere wenn die Maschine und der Dosierer sehr kompakt aufgrund der Einbauverhältnisse bauen müssten, ist diese lange Bauart des Diffusors nicht möglich.

Der Erfindung liegt die Aufgabe zu Grunde, einen Diffusor mit Luftzuleitung vorzuschlagen, welche den Einbau von Luftzuleitung und Diffusor in kompakt bauende Verteilmaschinen mit engen Einbauverhältnissen unter Beibehaltung einer gleichmäßigen Luftverteilung ermöglicht.

Diese Aufgabe wird erfindungsgemäß dadurch gelöst, dass die Luftzuleitung unter einem Winkel zwischen 90° und 130° zu dem Boden- und/oder Deckenwand in den Diffusor einmündet, so dass die Boden- und/oder Deckenwand eine Prallfläche für die aus der Luftzuleitung in den Diffusor strömenden Luftstrom ist.

Infolge dieser Maßnahmen wird der von dem Gebläse erzeugte und in den Diffusor einströmende Luftstrom durch den Aufprall auf eine der Innenwände des Diffusors aufgrund des unter einem Winkel eingeleitete Luftstromes fächerartig über die gesamte Innenbreite des Diffusors gleichmäßig auf alle Lufteinlassöffnungen des Dosierers aufgeteilt. Somit kann der Diffusor sehr kurz gebaut werden.

Diese Aufteilung ist besonders gleichmäßig, wenn der Einmündungswinkel der Luftzuleitung zu Boden- und/oder Deckenwand zwischen 100° und 110° beträgt.

In einer Weiterbildung ist vorgesehen, dass die Anzahl der Lufteinlassöffnungen in das Gehäuse gleich der Anzahl der Abgangsöffnungen aus dem Gehäuse ist, dass die gleiche Anzahl Lufteinlassöffnungen wie Abgangsöffnungen mit den Verschlussmitteln bei Absperrung von Abgangsöffnungen verschlossen werden.

Somit wird ein für vielfältige Einsatzzwecke verwendbarer Dosierer geschaffen, wobei unter Beibehaltung der für alle zumindest annähernd gleichmäßige Luftströmung in den Materialleitungen, bei einer Verringerung der Anzahl der aktiv mit Material und Luftströmung beaufschlagten Materialleitungen ermöglicht wird.

Es werden bei den abzusperrenden Materialleitungen sowohl die Lufteinlassöffnungen wie Abgangsöffnungen mit Verschlussmitteln verschlossen. Hierdurch wird die zugeführte Luftströmung gleichmäßig auf die Lufteinlassöffnungen der aktiven Materialleitungen, denen vom Dosierer Material zugeführt wird, aufgeteilt.

Eine vorteilhafte gleichmäßige Luftführung lässt sich dadurch erreichen, dass die Lufteinlassöffnungen den Abgangsöffnungen gegenüber liegend angeordnet sind.

Eine einfache Ausgestaltung der Verschlussmittel lässt sich dadurch erreichen, dass die Verschlussmittel als stopfen-und/oder kappenartig ausgebildet sind.

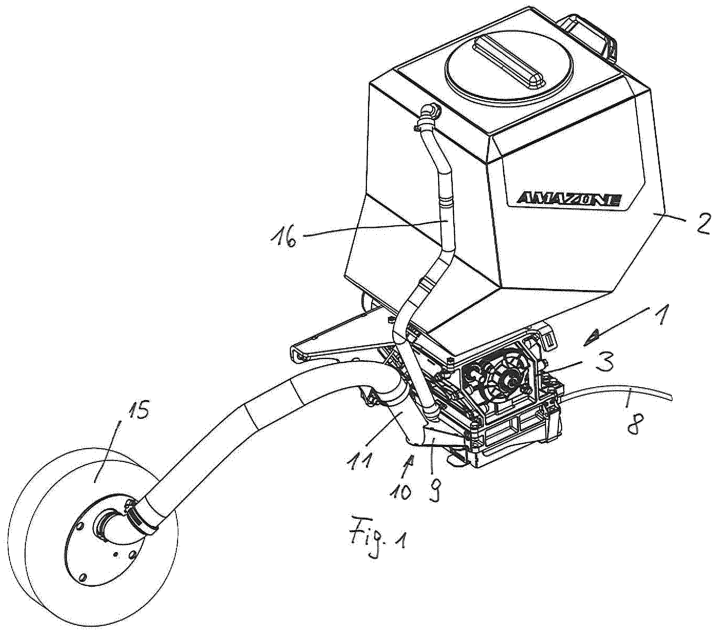

Weitere Einzelheiten der Erfindung sind der Beispielsbeschreibung und den Zeichnungen zu entnehmen. Hierbei zeigen
- Fig. 1: einen Teil der Verteilmaschine mit dem pneumatischen Dosierer in perspektivischer Darstellung,

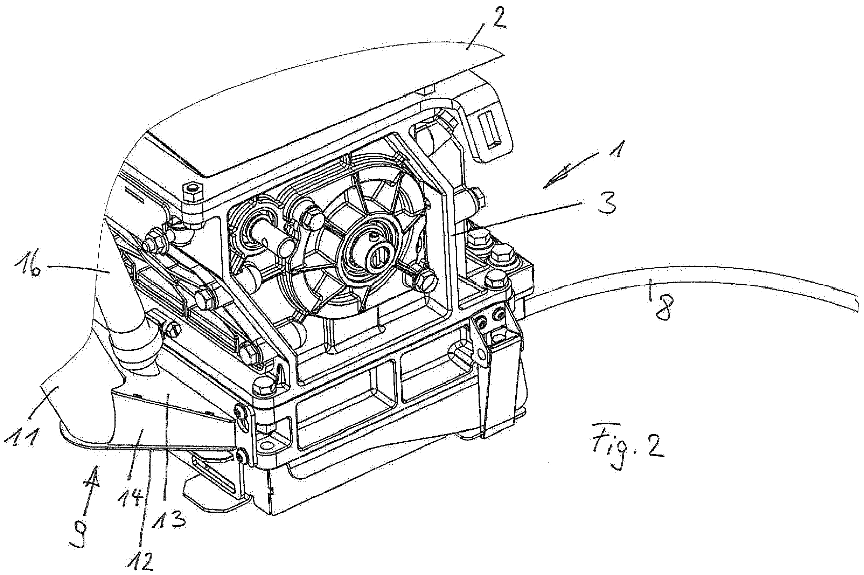

- Fig. 2: den pneumatischer Dosierer im vergrößertem Maßstab und in perspektivischer Darstellung,

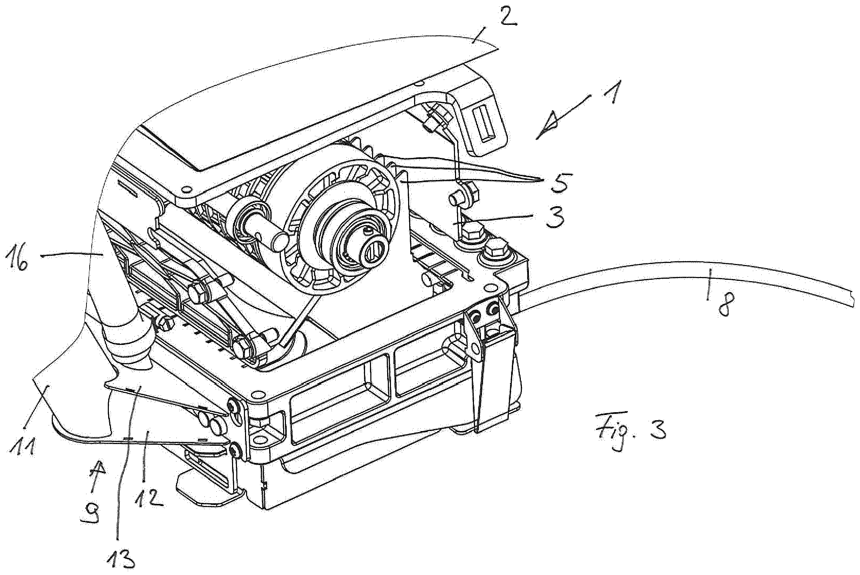

- Fig. 3: den Dosierer in der Darstellungsweise gemäß Fig. 2, wobei die Seitenwand des Dosierers abgenommen ist,

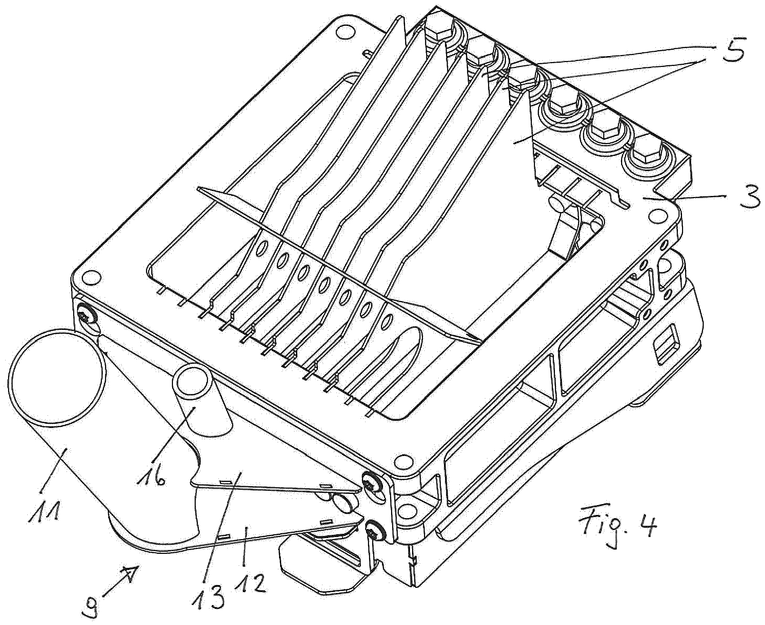

- Fig. 4: das unterhalb des Dosiererelementes des Dosierers angeordnete Einschleusegehäuse der Materialleitungen in perspektivischer Darstellung, wobei die Seitenwand des Dosierers abgenommen ist,

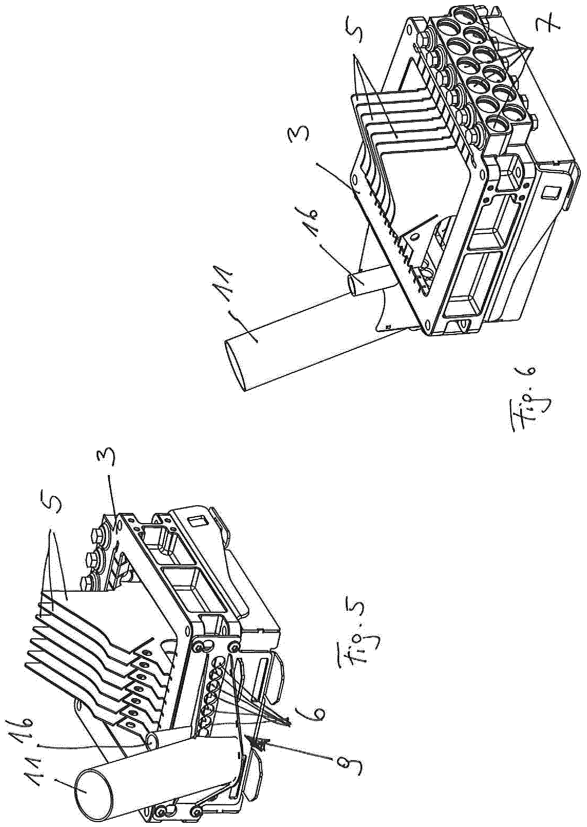

- Fig. 5: das Einschleusegehäuse mit dem vor den Lufteinlässenöffnungen angeordneten Diffusor, wobei die vordere Seitenwand des Diffusors nicht dargestellt ist, in perspektivischer Darstellung,
- Fig. 6: das Einschleusegehäuse mit dem vor den Lufteinlässenöffnungen angeordneten Diffusor, in perspektivischer Darstellung,

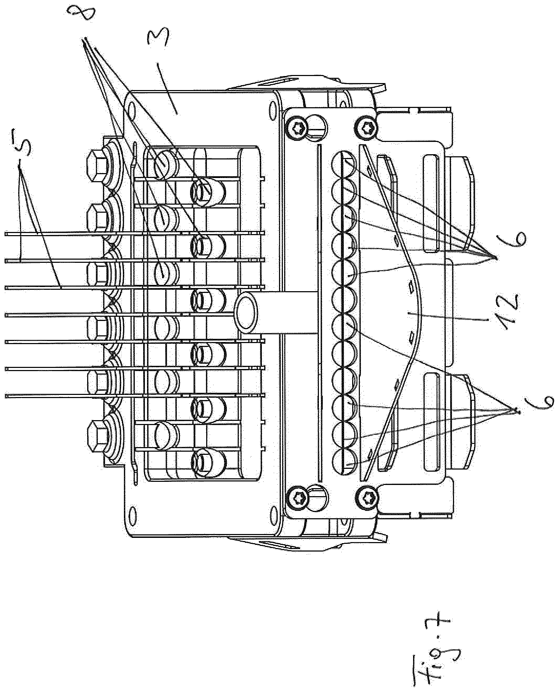

- Fig. 7: das Einschleusegehäuse mit dem vor den Lufteinlässenöffnungen angeordneten Diffusor gemäß Fig. 6, in einer weiteren perspektivischen Darstellung,

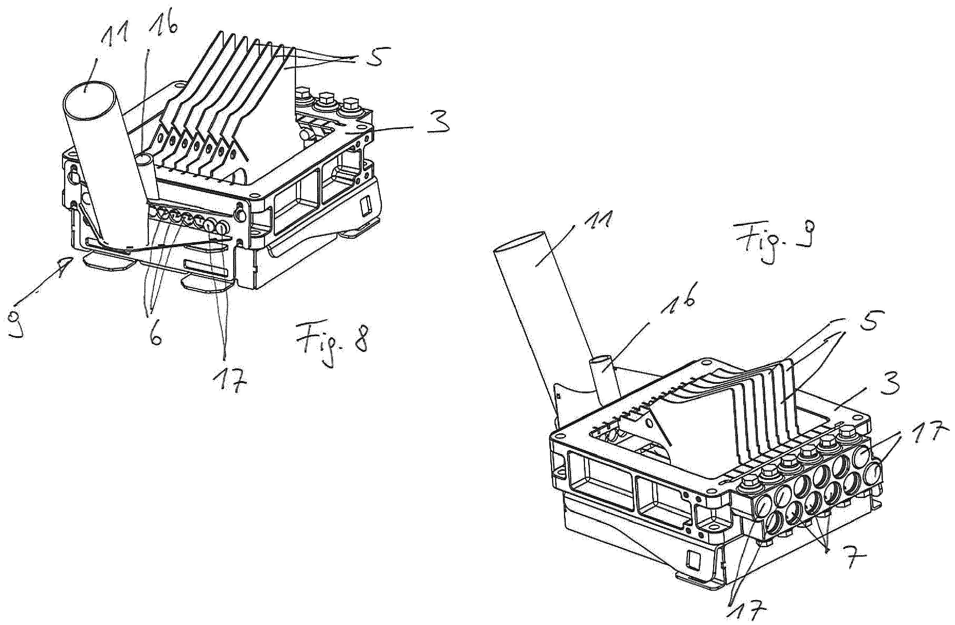

- Fig. 8: das Einschleusegehäuse mit dem vor den Lufteinlässenöffnungen angeordneten Diffusor, wobei die vordere Seitenwand des Diffusors nicht dargestellt ist, in perspektivischer Darstellung, und wobei jeweils die beiden seitlichen Lufteinlassöffnungen mittels Verschlusskappen verschlossen sind,
- Fig. 9: das Einschleusegehäuse mit dem vor den Lufteinlässenöffnungen angeordneten Diffusor, in perspektivischer Darstellung, und wobei jeweils die beiden seitlichen Abgangsöffnungen mittels Verschlusskappen verschlossen sind,

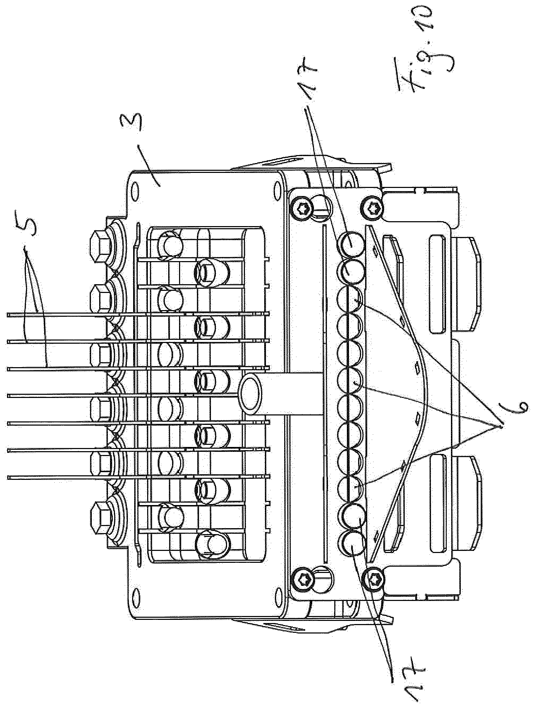

- Fig.10: das Einschleusegehäuse mit dem vor den Lufteinlässenöffnungen angeordneten Diffusor gemäß Fig. 8, wobei die Seitenwände des Diffusors unter die Luftzuleitung nicht dargestellt ist, in perspektivischer Darstellung, und wobei jeweils die beiden seitlichen Lufteinlassöffnungen mittels Verschlusskappen verschlossen sind,

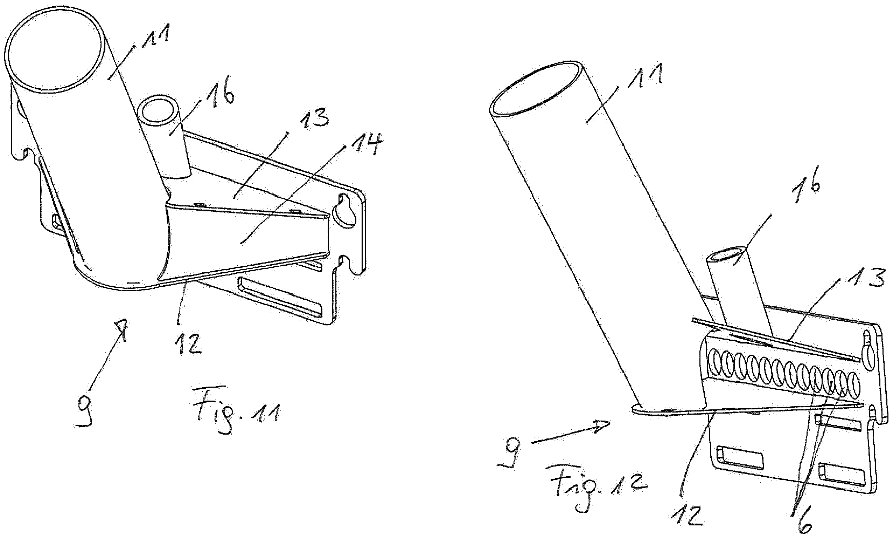

- Fig. 11: der Diffusor in perspektivischer Darstellung und
- Fig. 12: der Diffusor gemäß Fig. 11, wobei die Seitenwand abgenommen ist.

Der pneumatische Dosierer 1 ist unterhalb der Auslassöffnung eines Vorratsbehälters 2, der zur Aufnahme von auszubringenden landwirtschaftlichen Materialien bestimmt ist, angeordnet. Der Vorratsbehälter 2 ist an dem Rahmen einer landwirtschaftlichen Verteilmaschine in geeigneter Weise befestigt.

Der Dosierer 1 weist ein Dosiergehäuse 3 auf. In dem Dosiergehäuse 3 ist eine nicht näher dargestellte in regelbarer Weise antreibbare Dosierwalze 4 gelagert. In dem Dosiergehäuse 3 sind Materialeinleitvorrichtungen 5 angeordnet. Diesen Materialleiteinrichtungen 5 wird von der Dosiererwalze 4 in einstellbaren Mengen das sich im Vorratsbehälter 2 befindliche landwirtschaftliche Material zugeleitet. Auf der einen Seite sind dem Dosiergehäuse 3 Lufteinlassöffnungen 6, die mit dem Materialleiteinrichtungen 5 verbunden sind, und auf der anderen Seite sind dem Dosiergehäuse 3 Abgangsöffnungen 7, an welche zu Ausbringorganen führende Materialleitungen 8 anschliessbar sind, zugeordnet. Die Lufteinlassöffnungen 6 sind den Abgangsöffnungen 7 gegenüber liegend angeordnet.

Vor den Lufteinlassöffnungen 6 ist ein Diffusor 9 angeordnet, der den Anschlussbereich 10 der Luftzuleitung 11 an das Gehäuse 3 vor den Lufteinlassöffnungen 6 bildet. Der Diffusor 9 weist jeweils eine beabstandet zueinander angeordnete Boden- 12 und Deckenwand 13 sowie Seitenwand 14 auf. An den Diffusor 9 ist eine Luftzuleitung 11, die an ein Gebläse 15, welches einen Druckluftstrom erzeugt, angeschlossen. Die Luftzuleitung 11 mündet unter einem Winkel zwischen 90° und 130°, vorzugsweise 100° und 110° zu der Bodenwand 12 und/oder Deckenwand 13 in den Diffusor 9 ein, wie die Zeichnungen zeigen. Hierdurch bildet beim Ausführungsbeispiel die Bodenwand 12 eine Prallflaeche für den aus der Luftzuleitung 11 in den Diffusor 9 einströmenden Luftstrom. Hierdurch teilt sich der einströmende Luftstrom in dem Diffusor 9 gleichmäßig auf, so dass alle Lufteinlassöffnungen 6 in dem Dosiergehäuse 3, die über die Materialleiteinrichtungen 5 zu den Abgangsöffnungen 7 und den daran angeschlossenen Materialleitungen 8 führen, zumindest annähernd gleichmäßig mit der gleichen Luftströmung versorgt und beaufschlagt werden.

Das pneumatische Fördersystem ist als geschlossenes Druckluftsystem ausgebildet. Hierzu ist der Vorratsbehälter 2 druckdicht ausgestaltet und verschlossen. Um dem Vorratsbehälter 2 mit Druckluft zu beaufschlagen und so unter einem Überdruck gegenüber dem Atmosphärendruck zu setzen, führt eine Verbindungsleitung 16 von dem Diffusor 9 zu dem Vorratsbehälter 2.

Um den erfindungsgemäßen pneumatischen Dosierer 3 für eine unterschiedliche Anzahl anzuschließender Materialleitungen 8, und somit für eine unterschiedliche Anzahl von Maschinen unterschiedlicher Arbeitsbreiten oder mit unterschiedlich vielen Ausbringorganen ausgestatteten Verteilmaschine verwenden zu können, lassen sich einzelne Abgangsöffnungen 7 an dem Dosiergehäuse 3 stilllegen. Hierzu werden sowohl die entsprechenden Lufteinlassöffnungen 6 wie auch die entsprechenden Abgangsöffnungen 7 mit als Verschlussstopfen 17 ausgebildeten Verschlussmitteln verschlossen. Diese Verschlussmitteln 17 sind stopfen- und/oder kappenartig ausgestaltet. Hierbei werden immer gegenüberliegende Lufteinlassöffnungen 6 und Abgangsöffnungen 7 entsprechend verschlossen. Durch das Verschließen der Lufteinlassöffnungen 6 und zusätzlich der entsprechenden gegenüberliegenden Abgangsöffnungen 7 wird somit eine gleichmäßige Luftaufteilung und eine gute Materialführung von dem Druckluftstrom innerhalb des Dosiergehäuses 3 im Bereich der Materialleiteinrichtungen 5 und in den an den Abgangsöffnungen 7 angeschlossenen Materialleitungen 8 erreicht.

## Patentansprüche

1. Pneumatischer Dosierer zum Einbringen von landwirtschaftlichen Materialien, insbesondere Microgranulat, in einen Luftstrom mit einem Dosiergehäuse, welches Lufteinlassöffnungen, an welche zumindest eine von einem Gebläse mit Druckluft beaufschlagte Luftzuleitung angeschlossen ist, und Abgangsöffnungen, an denen mit einer Luftströmung beaufschlagte Materialleitungen anschliessbar sind, aufweisen, wobei der Anschlussbereich der Luftzuleitung an das Gehäuse vor den Lufteinlässenöffnungen als Diffusor ausgebildet ist, wobei der Diffusor jeweils ein beabstandet zueinander angeordnetes Boden- und Deckenwand aufweist, **dadurch gekennzeichnet, dass** die Luftzuleitung (11) unter einem Winkel zwischen 90° und 130° zu dem Boden- (12) und/oder Deckenwand (13) in den Diffusor (9) einmündet, so dass die Boden- (12) und/oder Deckenwand (13) eine Prallflaeche für die aus der Luftzuleitung (11) in den Diffusor (9) strömenden Luftstrom ist.

2. Dosierer nach Anspruch eins, **dadurch gekennzeichnet, dass** der Einmündungswinkel der Luftzuleitung (11) zu Boden- (12) und/oder Deckenwand (13) zwischen 100° und 110° beträgt.
